# EUROPEAN PATENT APPLICATION

(11) **EP 4 733 047 A1**
(43) Date of publication of application: **29.04.2026**
(21) Application number: 24851500.9
(22) Date of filing: 10.07.2024
(51) Int. Cl.: B29D 30/20

(54) **METHOD AND SYSTEM FOR PRODUCING TIRE**

(30) Priority: 08.08.2023 JP 2023129623
(71) Applicant: The Yokohama Rubber Co., Ltd., Hiratsuka-shi, Kanagawa 254-8601 (JP)
(72) Inventor: KONDO Masatomo, Hiratsuka-shi, Kanagawa 254-8601 (JP); MATSUMURA Kensuke, Hiratsuka-shi, Kanagawa 254-8601 (JP); NUMAZAKI Yasushi, Hiratsuka-shi, Kanagawa 254-8601 (JP); KAWAI Masahiro, Hiratsuka-shi, Kanagawa 254-8601 (JP); OISHI Junpei, Hiratsuka-shi, Kanagawa 254-8601 (JP); ZENYOJI Chihiro, Hiratsuka-shi, Kanagawa 254-8601 (JP); WATANABE Takehiro, Hiratsuka-shi, Kanagawa 254-8601 (JP); SAITO Dai, Hiratsuka-shi, Kanagawa 254-8601 (JP); MATSUMARU Teruaki, Hiratsuka-shi, Kanagawa 254-8601 (JP); ONISHI Kohei, Hiratsuka-shi, Kanagawa 254-8601 (JP); WATANABE Masayuki, Hiratsuka-shi, Kanagawa 254-8601 (JP)
(74) Representative: Dilg, Haeusler, Schindelmann Patentanwaltsgesellschaft mbH
(86) International application number: PCT/JP2024/024869
(87) International publication number: WO 2025/033071

(57) **Abstract**

There is provided a tire production method and system that reduce time loss due to material replenishment to improve work efficiency in a tire forming step, while downsizing the forming device. Materials in a wound state are stocked in a plurality of supply units arranged side by side for each material. A pair of bead members (MC) are stocked in a plurality of bead supply units (11). Each material cut into a predetermined length is supplied to a band drum (3) and a belt drum (4) by a supply conveyor via a slide conveyor to form an inner circumferential member (MA) and an outer circumferential member (MB). A green tire (G) is formed on the shaping drums (2) by using the inner circumferential member (MA), the outer circumferential member (MB), and the pair of bead members (MC). Axial centers (C1) of the drums (2) and (3) are coaxially aligned in transferring each material, and the drum axial centers (C2) of the drums (3) and (4) are coaxially aligned in transferring each material. While each material is being supplied from the other of the supply units, one of the supply units that is empty is replaced with a new supply unit with the material stocked.

## Description

### Technical Field

The present invention relates to a tire production method and system and particularly relates to a tire production method and system that can reduce time loss due to replenishment of tire materials so as to improve work efficiency in a tire forming step while downsizing a tire forming device.

### Background Art

A tire is manufactured by vulcanizing a green tire. A green tire is formed by layering a large number of types of tire members. For example, a green tire is formed by integrating an innerliner, a carcass material, a belt material, tread rubber, a pair of bead members, and the like, on a shaping drum (see, for example, Patent Document 1).

A tire production device proposed in Patent Document 1 includes three types of drums, namely, a first drum to which a carcass member is supplied, a second drum to which an outer member is supplied, and a third drum to which an inner member is supplied. In the tire production device, the inner member, the carcass member, the outer member, and a pair of bead members are integrated in the third drum to form the green tire.

In the tire production device, each material (such as carcass member, belt member, tread rubber member, innerliner) of a predetermined length is supplied to a corresponding drum by a flat-laid supply device. Therefore, when any one of the supply sources (such as the stock drum) supplying respective materials to respective supply devices runs out of a material, the tire forming step will be interrupted until the material is replenished to the supply source. Alternatively, to avoid supply interruption of each material, loading an excessive amount of material on each supply device or the like and allowing the material to be stocked requires a larger device. Therefore, there is room for reducing time loss due to replenishment of tire materials to improve work efficiency of the forming step, while downsizing the tire forming device. Along with improvement of the work efficiency of the forming step, productivity of tires can also be improved.

### Citation List

### Patent Literature

Patent Document 1: JP 2013-220636

### Summary of Invention

### Technical Problem

An object of the present invention is to provide a tire production method and production system that can reduce time loss due to replenishment of tire materials and improve work efficiency in the forming step of tires while downsizing the tire forming device.

### Solution to Problem

To achieve the object described above, a tire production method of an embodiment of the present invention is a tire producing method of forming a green tire by layering multiple types of tire members and vulcanizing the green tire. The tire production method includes: providing, at least as the tire members, an inner circumferential member including an innerliner, a carcass material, and a side portion as materials, an outer circumferential member including a belt material and a tread portion as materials, and a bead member; stocking each of the materials at a stock position, at a stock position of each of the materials, arranging a plurality of supply units around which each of the materials is wound side by side, disposing a slide conveyor configured to slide in a width direction with respect to each of the supply units, and stocking a predetermined number of pairs of the bead members in a plurality of bead supply units at a bead stock position; supplying, by an individual supply conveyor, each of the materials of the inner circumferential member precut into a predetermined length from each stock position to a band drum via the corresponding slide conveyor, in the band drum, forming the inner circumferential member by using each of the materials cut into a predetermined length; supplying, by an individual supply conveyor, each of the materials of the outer circumferential member precut into a predetermined length from each stock position to a belt drum via the corresponding slide conveyor and in the belt drum, forming the outer circumferential member using each of the materials cut into a predetermined length; transferring, by using a band transfer machine, the inner circumferential member from the band drum to the shaping drum, transferring, by using a belt transfer machine, the outer circumferential member from the belt drum to the shaping drum, and externally fitting, by using a bead transfer machine, a pair of the bead members from one of the bead supply units to the inner circumferential member; coaxially aligning the drum axial centers of the band drum and the shaping drum when transferring the inner circumferential member; coaxially aligning the drum axial centers of the belt drum and the shaping drum when transferring the outer circumferential member; in the shaping drum, forming the green tire using the inner circumferential member, the outer circumferential member, and the pair of bead materials; and at the stock position of each of the materials, supplying, when the material stocked in one of the supply units runs out, the material from the other of the supply units and replacing, while the material is being supplied from the other of the supply units, the one of the supply units that is empty with a new one of the supply units with the material stocked.

A tire production system of an embodiment of the present invention is a tire producing system including a forming device having a shaping drum on which multiple types of tire members are layered to form a green tire and a vulcanization device that vulcanizes the green tire. The tire production system includes: at least as the tire members, an inner circumferential member including an inner liner, a carcass material, and a side portion as materials, an outer circumferential member including a belt material and a tread portion as materials, and a bead member; a slide conveyor having a stock position at which each of the materials is stocked, a plurality of supply units with each of the materials wound being arranged side by side at a stock position of each of the material, the slide conveyor being configured to slide in a width direction with respect to each of the supply units; a bead stock position at which a predetermined number of pairs of the bead members are stocked, a plurality of bead supply units being disposed at the bead stock position; a supply conveyor configured to supply each of the materials of the inner circumferential member precut into a predetermined length from each stock position to a band drum; a band drum on which the inner circumferential member is to be formed by using each of the materials precut into a predetermined length; a supply conveyor configured to supply each of the materials of the outer circumferential member precut into a predetermined length from each stock position to a belt drum via the corresponding slide conveyor; a belt drum on which the outer circumferential member is to be formed by using each of the materials precut into a predetermined length; a band transfer machine configured to transfer the inner circumferential member from the band drum to the shaping drum; a belt transfer machine configured to transfer the outer circumferential member from the belt drum to the shaping drum; and a bead transfer machine configured to externally fit a pair of the bead members from one of the bead supply units to the inner circumferential member. Drum axial centers of the band drum and the shaping drum are coaxially aligned in transferring the inner circumferential member, and a drum axial center of the belt drum and the drum axial center of the shaping drum are coaxially aligned in transferring the outer circumferential member. In the shaping drum, the green tire is formed by using the inner circumferential member, the outer circumferential member, and the pair of the bead members. At the stock position of each of the materials, when the material stocked in one of the supply units runs out, the material is supplied from the other of the supply units, and while the material is being supplied from the other supply unit, the one of the supply units that is empty is replaced with a new one of the supply units with the material stocked.

### Advantageous Effects of Invention

According to the present invention, arranging the plurality of supply units side by side at the stock position of each of the materials, and disposing a slide conveyor that slides in the width direction with respect to each of the supply units allows for supplying the respective materials from one of the plurality of supply units arranged side by side. Then, when the material stocked in one of the supply units arranged side by side runs out, the material is supplied from the supply unit on the other side and, while the material is being supplied from the supply unit on the other side, the emptied supply unit on one side is replaced with a new one of the supply unit with the material stocked, whereby interruption of the forming step due to replenishment of the material can be avoided. In addition, preparation of a plurality of the bead supply units allows for supplying also the pair of bead members from one of the plurality of bead supply units, whereby interruption of the forming step due to replenishment of the pair of bead members can be avoided.

Accordingly, it is not necessary to load and stock an extra amount of the material on each of the supply conveyors in order to reduce the time loss due to replenishment of each material, whereby
the length of each of the supply conveyors can be minimized. In addition, each of the materials is wound around and stocked in each of the supply units, which becomes advantageous for downsizing the forming device. In addition, with the drum axial centers of the band drum and the shaping drum being coaxially aligned when transferring the inner circumferential member, and the drum axial centers of the belt drum and the shaping drum being coaxially aligned when transferring the outer circumferential member, the band transfer machine and the belt transfer machine only need to move in the direction of a common drum axial center for each of the drums, which turns out to be more advantageous for downsizing the forming device. As a result, it becomes advantageous for producing tires with an improved productivity while downsizing the tire forming device.

### Brief Description of Drawings

FIG. 1 is an explanatory diagram illustrating an embodiment of a tire production system in a plan view.
FIG. 2 is an explanatory diagram illustrating respective drums of the forming device in FIG. 1 in a front view.
FIG. 3 is an explanatory diagram illustrating a supply path from an innerliner supply unit to a band drum in a side view.
FIG. 4 is an explanatory diagram illustrating a supply path from a carcass material supply unit to a band drum in a side view.
FIG. 5 is an explanatory diagram illustrating a supply path from a side portion supply unit to a band drum in a side view.
FIG. 6 is an explanatory diagram illustrating a supply path from a belt material supply unit to a belt drum in a side view.
FIG. 7 is an explanatory diagram illustrating a supply path from a tread portion supply unit to a belt drum in a side view.
FIG. 8 is an explanatory diagram illustrating a supply path from a belt reinforcing material supply unit to a belt drum in a side view.
FIG. 9 is an explanatory diagram illustrating, in a plan view, a state in which an innerliner, a carcass material, and a side portion are supplied to a band drum.
FIG. 10 is an explanatory diagram illustrating, in a plan view, a state in which an innerliner, a carcass material, and a side portion cut into a predetermined length of FIG. 9 have been moved forward.
FIG. 11 is an explanatory diagram illustrating, in a plan view, a state in which a supply conveyor having the innerliner of FIG. 10 loaded thereon is turned 90 degrees, and the side portion cut into a predetermined length has been moved to the supply conveyor.
FIG. 12 is an explanatory diagram illustrating, in a plan view, a state in which the innerliner and the carcass material cut into a predetermined length of FIG. 11 are moved toward the band drum.
FIG. 13 is an explanatory diagram illustrating, in a plan view, a state in which the innerliner and the carcass material cut into a predetermined length of FIG. 12 are wound around a band drum.
FIG. 14 is an explanatory diagram illustrating, in a plan view, a state in which the band drum of FIG. 13 is moved in the width direction and the side portion cut to a fixed length is wound around the outer circumferential surface thereof to form an inner circumferential member.
FIG. 15 is an explanatory diagram illustrating, in a plan view, a state in which a pair of bead members are externally fitted to the inner circumferential member formed in FIG. 14.
FIG. 16 is an explanatory diagram illustrating, in a plan view, a state in which a belt material and a tread portion cut into a predetermined length are supplied to a belt drum.
FIG. 17 is an explanatory diagram illustrating, in a plan view, a state in which the belt material and the tread portion cut into a predetermined length of FIG. 16 are moved toward the belt drum.
FIG. 18 is an explanatory diagram illustrating, in a plan view, a state in which the belt material cut into a predetermined length of FIG. 17 is wound around a belt drum on one side.
FIG. 19 is an explanatory diagram illustrating, in a plan view, a state in which the belt drum of FIG. 18 is turned clockwise by 180 degrees and the belt reinforcing member is wound around the belt material wound around the belt drum on one side.
FIG. 20 is an explanatory diagram illustrating, in a plan view, a state in which the tread portion cut into a predetermined length of FIG. 19 is wound around a belt drum on one side to form an outer circumferential member, and the belt material is wound around a belt drum on the other side.
FIG. 21 is an explanatory diagram illustrating, in a plan view, a state in which the belt drum of FIG. 20 is turned counterclockwise by 180 degrees.
FIG. 22 is an explanatory diagram illustrating, in a plan view, a state in which an inner circumferential member and a pair of bead members are externally fitted to a shaping drum on one side.
FIG. 23 is an explanatory diagram illustrating, in a plan view, a state in which the shaping drum of FIG. 22 is turned clockwise by 180 degrees, and the belt reinforcing material is wound around a belt drum on the other side.
FIG. 24 is an explanatory diagram illustrating, in a plan view, a state in which the outer circumferential member transferred from the belt drums is externally fitted to a shaping drum on one side of FIG. 23, and the inner circumferential member and the pair of bead members are externally fitted to a shaping drum on the other side.
FIG. 25 is an explanatory diagram illustrating, in a plan view, a state in which the shaping drum of FIG. 24 is turned counterclockwise by 180 degrees and the belt material is wound around a belt drum on one side.
FIG. 26 is an explanatory diagram illustrating, in a plan view, a state in which the green tire is taken out from a shaping drum on one side of FIG. 25 and the belt drum is turned counterclockwise by 180 degrees.
FIG. 27 is an explanatory diagram illustrating in an enlarged longitudinal cross-sectional view of a portion of a vulcanization device vulcanizing the green tire of FIG. 26.

### Description of Embodiments

A tire production method and system according to the present invention will be described below, referring to embodiments illustrated in the drawings.

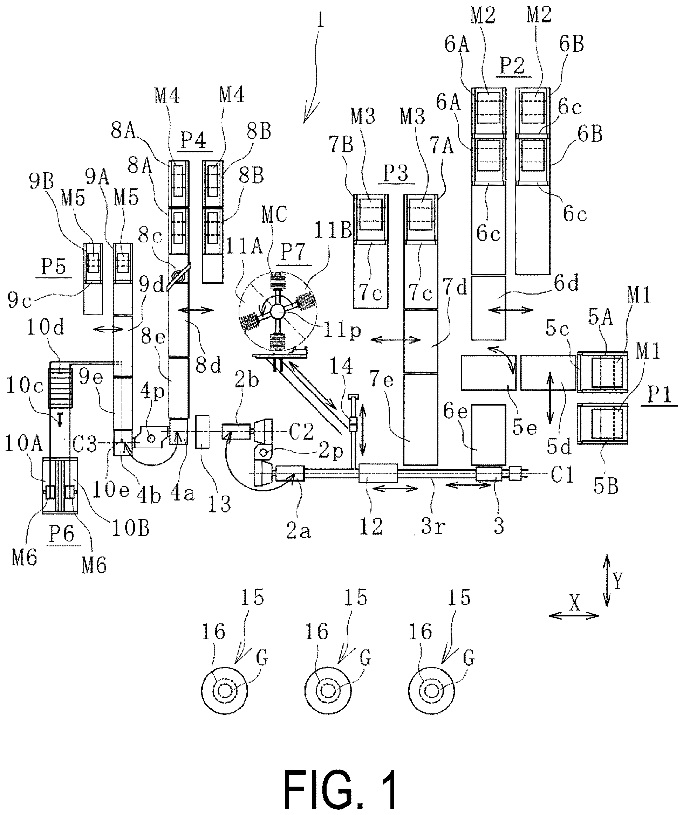

As illustrated in FIG. 1, the tire production system of an embodiment of the present invention includes a forming device 1 and a vulcanization device 15. multiple types of unvulcanized tire members M are layered using the forming device 1 to form a green tire G. A tire T is manufactured by vulcanizing the formed green tire G using the vulcanization device 15. The vulcanization device 15 has mounted thereon a vulcanization mold 16 corresponding to a tire specification. Various known vulcanization devices 15 can be used.

The green tire G has, as the tire members M, at least: an inner circumferential member MA having an innerliner M1, a carcass material M2 and a side portion M3; an outer circumferential member MB having a belt material M4 and a tread portion M5; and a pair of bead members MC. In the present embodiment, the outer circumferential member MB further has a belt reinforcing material M6. The belt reinforcing material M6 is optionally employed, and other types of materials may be employed for the tire member M as necessary. In the following, the innerliner M1, the carcass material M2, the side portion M3, the belt material M4, the tread portion M5, and the belt reinforcing material M6 will be respectively referred to as materials M1, M2, M3, M4, M5 and M6.

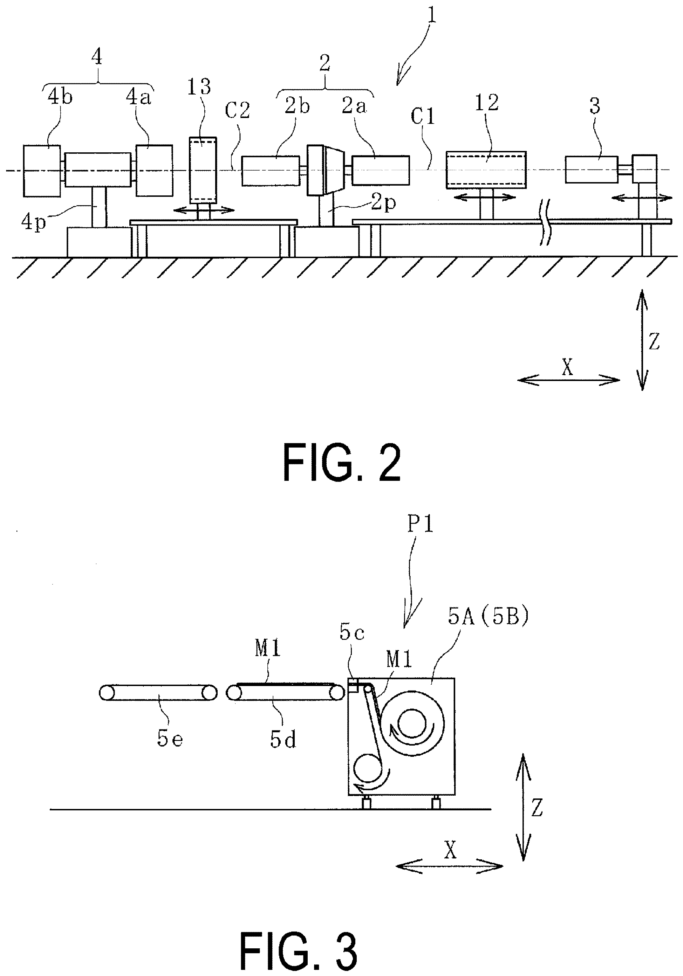

As illustrated in FIGS. 1 to 8, the forming device 1 includes: three types of drums, namely, shaping drums 2 (2a, 2b), a band drum 3, and belt drums 4 (4a, 4b); supply units 5 (5A, 5B), 6 (6A, 6B), 7 (7A, 7B), 8 (8A, 8B), 9 (9A, 9B) and 10 (10A, 10B) for respective materials M1, M2, M3, M4, M5 and M6; and a bead supply unit 11 (11a, 11B) for a pair of bead members MC. Arrows X, Y and Z in the drawing are directions orthogonal to each other, respectively indicating the width direction, the depth direction, and the height direction of the forming device 1.

In the present embodiment, there are disposed two shaping drums 2 (2a, 2b), one band drum 3 and two belt drums 4 (4a, 4b). The shaping drums 2 (2a, 2b) are disposed between the band drum 3 and the belt drums 4 in the X direction. In the present embodiment, the two shaping drums 2a and 2b are disposed at positions turned about a turning shaft 2p by 180 degrees in a plan view. The two shaping drums 2a and 2b may be turned clockwise or counterclockwise about the turning shaft 2p by 180 degrees to be fixedly disposed at a same position alternately.

The drum axial center C1 of the band drum 3 extends in the X direction and is movable along a guide rail 3r extending in the X direction. In addition, the two belt drums 4a and 4b are disposed at symmetric positions about the turning shaft 4p by 180 degrees in a plan view. The two belt drums 4a and 4b may be turned clockwise or counterclockwise about the turning shaft 4p by 180 degrees to be fixedly disposed at a same position alternately.

When the respective shaping drums 2a and 2b are turned about the turning shaft 2p and fixedly disposed at the side of the band drum 3 and the side of the belt drum 4, the respective drum axial centers C1 and C2 extend in the X direction (lie parallel to the X direction). The respective drum axial centers C1 of the shaping drum 2 and the band drum 3 that have been turned and fixedly disposed at the side of the band drum 3 are parallel to the X direction and coincide in the Y and Z directions. In other words, the respective drum axial centers C1 of the shaping drum 2 and the band drum 3 adjacent to each other coincide in the X, Y and Z directions.

When the belt drums 4a and 4b are turned about the turning shaft 4p to be fixedly disposed at the side of the shaping drum 2 and the opposite side of the shaping drum 2, the drum axial centers C2 and C3 extend in the X direction (lie parallel to the X direction). The respective drum axial centers C2 of the belt drum 4 turned to be fixedly disposed to the side of the shaping drum 2 by turning, and the shaping drum 2 turned to be fixed disposed to the side of the belt drum 4 are parallel to the X direction and coincide in the Y and Z directions. In other words, the respective drum axial centers C2 of the belt drum 4 and the shaping drum 2 adjacent to each other coincide in the X, Y and Z directions.

Each of the supply units 5, 6, 7, 8, 9, 10 is arranged at each of the stock positions P1, P2, P3, P4, P5 and P6 of each of the materials M1, M2, M3, M4, M5 and M6. The bead supply unit 11 is disposed at a stock position P7 of the bead member MC. At each of the stock positions P1, P2, P3, P4, P5 and P6, a plurality of rows of corresponding supply units are arranged side by side. In other words, the supply units 5A and 5B are arranged side by side at the stock position P1, the supply units 6A and 6B are arranged side by side at the stock position P2, the supply units 7A and 7B are arranged side by side at the stock position P3, the supply units 8A and 8B are arranged side by side at the stock position P4, the supply units 9A and 9B are arranged side by side at the stock position P5, and the supply units 10A and 10B and are arranged side by side at the stock position P6.

In the present embodiment, one unit of green tire G uses one piece of the materials M1 and M5 cut into a predetermined length, two pieces of the materials M2 and M4 cut into a predetermined length, and a pair of two materials M3 cut into a predetermined length. Therefore, at the stock position P2, two of the supply units 6A and 6B are arranged in tandem (arranged in series in the Y direction). Also at the stock position P4, two of the supply units 8A, and the supply units 8B are arranged in tandem (arranged in series in the Y direction). Then, in order to form one unit of green tire G, two pieces of the materials M2 are sequentially supplied from either the two supply units 6A arranged in tandem or the two supply units 6B arranged in tandem, and two pieces of the materials M4 are sequentially supplied from either the two supply units 8A arranged in tandem or the two supply units 8B arranged in tandem. In addition, each of the supply units 7A and 7B has a pair of two materials M3 stocked therein, and the pair of two materials M3 are sequentially supplied from either one of the supply units 7A and 7B.

Each of the supply units 5, 6, 7, 8, 9 and 10 has a winding core, around which each of the materials M1, M2, M3, M4, M5 and M6 is stocked in a wound state. Each of the materials M1 to M5 is wound around its winding core together with a release liner. The material M6 is wound around its winding core without a release liner. In the present embodiment, although each of the materials M1 to M6 is wound in an elongated state, the materials M1 to M5 can also be stocked in a manner such that a large number of the materials M1 to M5 which have been cut into a predetermined length are wound around a winding core.

The bead supply unit 11 has an annular rack that horizontally turns about a turning shaft 11p, with a large number of bead members MC being hooked on the rack. The rack is divided into two regions. namely. units 11A and 11B, in the circumferential direction. Each of the bead supply units 11A and 11B has a predetermined number of pairs of bead members MC are hooked thereon, and turning of the rack in the circumferential direction causes each of the bead supply units 11A and 11B to sequentially move to the supply position and a standby position. The bead members MC are sequentially supplied in pairs from the bead supply unit 11 that has moved to the supply position.

The materials M1, M2 and M3 are supplied to the band drum 3 from the respective supply units 5, 6 and 7 through respective supply paths. The materials M4, M5 and M6 are supplied to the belt drum 4 from the respective supply units 8, 9 and 10 through respective supply paths.

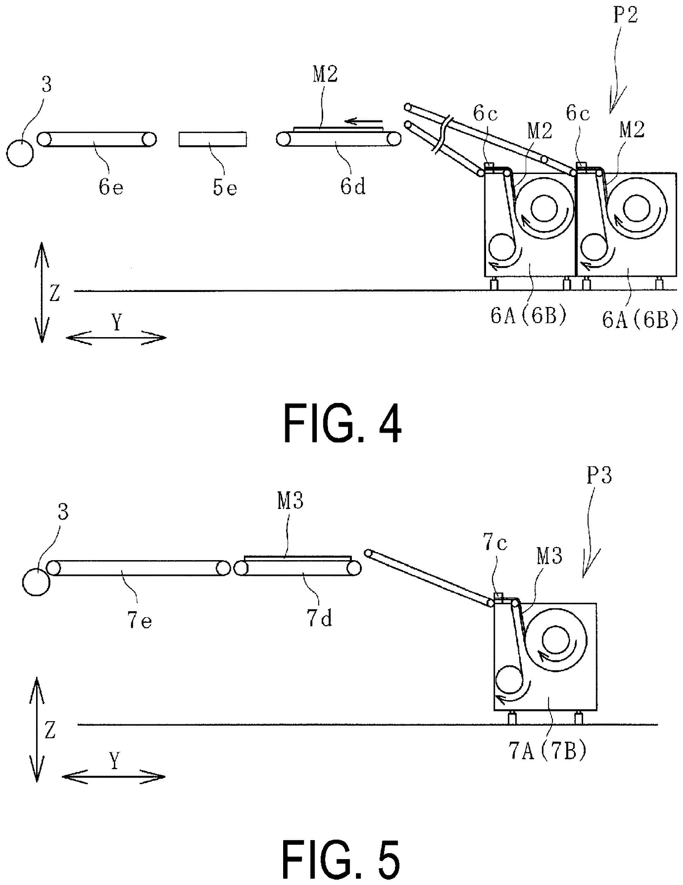

Between the respective supply units 5, 6 and 7, and the band drum 3, there are disposed cutters 5c, 6c and 7c, slide conveyors 5d, 6d and 7d, and supply conveyors, 5e, 6e and 7e. As illustrated in FIG. 4, each of the supply units 6 arranged in tandem at the stock position P2 has the cutter 6c, with supply guides installed between each cutter 6c and one slide conveyor 6d in two, i.e., upper and lower stages. In other words, the material M2 to be output from the supply unit 6 disposed on the closer side to the band drum 3 in the Y direction is supplied to the slide conveyor 6d through the supply guide installed on the lower side. The material M2 to be output from the supply unit 6 disposed on the farther side from the band drum 3 in the Y direction is supplied to the slide conveyor 6d through the supply guide installed on the upper side.

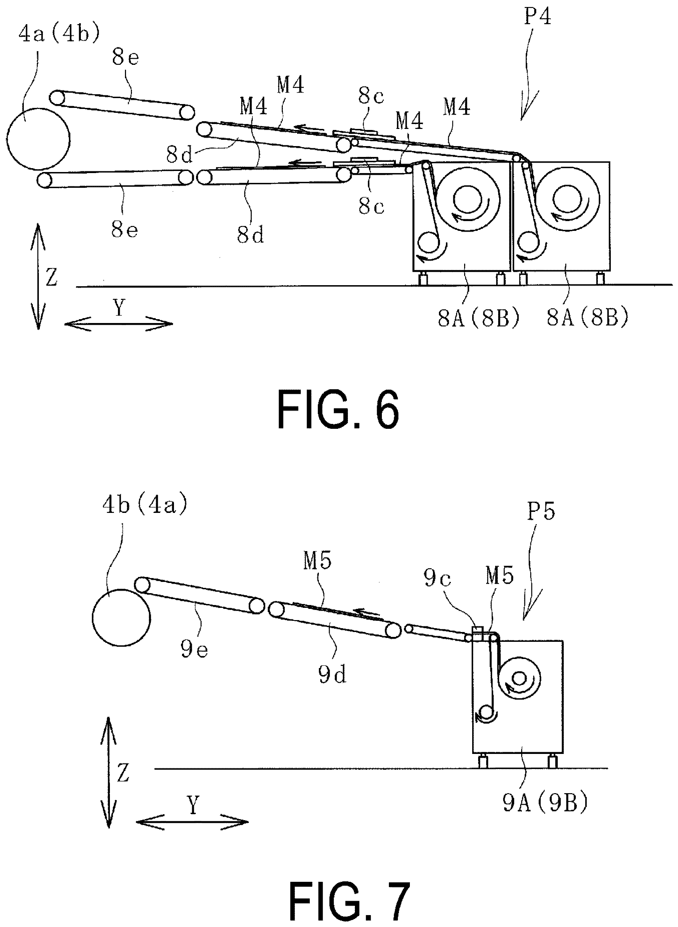

Between the respective supply units 8 and 9, and the belt drum 4, there are disposed cutters 8c and 9c, slide conveyors 8d and 9d, and supply conveyors 8e and 9e. As illustrated in FIG. 6, each of the supply units 8 arranged in tandem at the stock position P4 has the cutter 8c, the slide conveyor 8d, and the supply conveyor 8e, the cutter 8c, the slide conveyor 8d, and the supply conveyor 8e being installed in two, i.e., upper and lower stages. In other words, the material M4 to be output from the supply unit 8 disposed on the closer side to the belt drum 4 in the Y direction is supplied to the slide conveyor 8d and the supply conveyor 8e disposed on the lower side through the supply guide installed on the lower side. The material M4 to be output from the supply unit 6 disposed on the farther side from the belt drum 4 in the Y direction is supplied to the slide conveyor 8d and the supply conveyor 8e disposed on the upper stage through the supply guide installed on the upper stage. In the present embodiment, the cutter 8c disposed on the upper stage slides together with the slide conveyor 8d disposed on the upper stage, and the cutter 8c disposed on the lower side slides together with the slide conveyor 8d disposed on the lower stage.

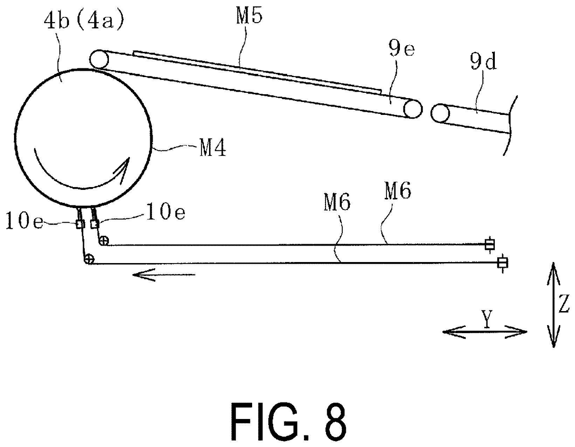

Between the supply unit 10 and the belt drum 4, there are disposed a cutter 10c, a festoon portion 10d, and a head 10e. As illustrated in FIG. 8, the material M6 to be output from each of the supply units 10A and 10B is supplied to separate heads 10e and 10e through individual supply paths. Each of the heads 10e and 10e are arranged in tandem below the belt drum 4 in the Y direction.

The cutters 5c, 6c, 7c, 8c and 9c cut the respective materials M1, M2, M3, M4 and M5 into a predetermined length. The slide conveyors 5d, 6d, 7d, 8d and 9d, and the supply conveyors 5e, 6e, 7e, 8e, and 9e are belt conveyors that transport each of the materials M1, M2, M3, M4 and M5 in a flat-laid state.

Each one of the slide conveyors 5d, 6d, 7d, 8d and 9d is disposed for each of the supply units 5, 6, 7, 8 and 9 that are arranged side by side. For example, at the stock position P1 of the material M1, there is disposed one of the slide conveyors 5d that slides in the width direction of the supply units 5 (5A, 5B) arranged side by side. The slide conveyor 5d moves in the width direction between the respective supply units 5A and 5B ahead in the supply direction of the material M1. The other stock positions P2, P3, P4 and P5 are configured in a similar manner.

The cutter 10c cuts the trailing end portion of the material M6 when joining pieces of the material M6. The festoon portion 10d stores a predetermined required amount (required length) of the material M6. The head 10e guides the material M6 that has passed through the festoon portion 10d toward the drum surface of the belt drum 4. The material M6 is supplied to the belt drum 4 in an elongated state, and cut into a predetermined length by the head 10e on the belt drum 4.

A band transfer machine 12 is disposed between the band drum 3 and the shaping drum 2. A belt transfer machine 13 is disposed between the belt drum 4 and the shaping drum 2. A bead transfer machine 14 is disposed between the bead supply unit 11 and the shaping drum 2.

A cylindrical inner circumferential member MA is formed on the band drum 3 using the supplied materials M1 to M3, and a cylindrical outer circumferential member MB is formed on the belt drum 4 using the supplied materials M4 to M6. The band transfer machine 12 transfers the inner circumferential member MA from the band drum 3 to the shaping drum 2. The belt transfer machine 13 transfers the outer circumferential member MB from the belt drum 4 to the shaping drum 2. The bead transfer machine 14 transfers a pair of bead members MC from one of the bead supply units 11A and 11B and externally fits them on the cylindrical inner circumferential member MA. On the shaping drum 2, a cylindrical green tire G is formed using the inner circumferential members MA (M1 to M3), the outer circumferential members MB (M4 to M6), and the pair of bead members MC.

Next, there will be described an example of a procedure of producing a tire using this production system. In this production method, the green tire G is sequentially and continuously formed by the forming device 1. In other words, forming works of a plurality of green tires G are performed in the forming device 1 around a same time. Although the green tires G formed around a same time may all conform to a same specification, some of the green tires G may be changed midway to conform to different specifications.

When continuously forming a large number of green tires G without changing the tire specification, required amounts of the materials M1 to M6 conforming to a same specification are stocked in each of the supply units 5 to 10 arranged side by side at each of the stock positions P1 to P6. At the stock position P7, a required amount of the bead member MC conforming to a same specification is stocked in the bead supply units 11A and 11B.

When forming the green tire G by changing the tire specifications in the middle, required amounts of the materials M1 to M6 according to the tire specifications of the green tire G to be formed are stocked respectively for the supply units 5A to 10A on one side and the supply units 5B to 10B on the other side, at each of the stock positions P1 to P6. At the stock position P7, a required amount of the bead member MC according to the tire specification of the green tire G to be formed is stocked for each of the bead supply units 11A and 11B.

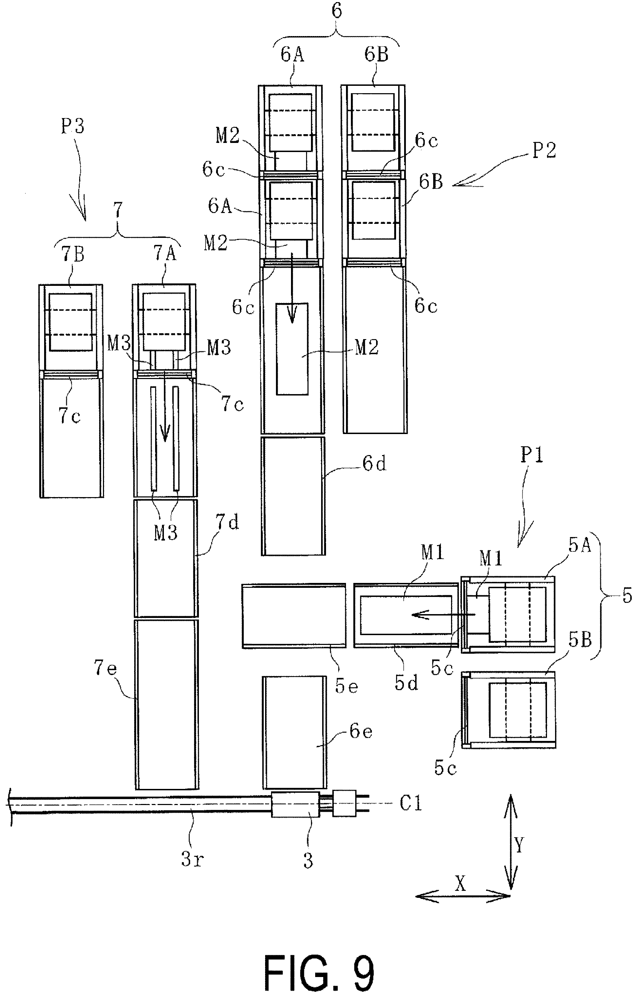

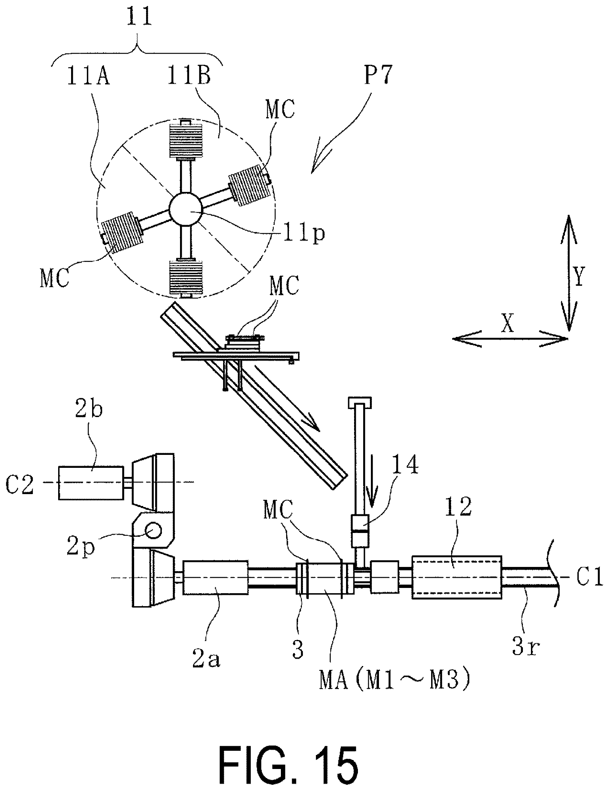

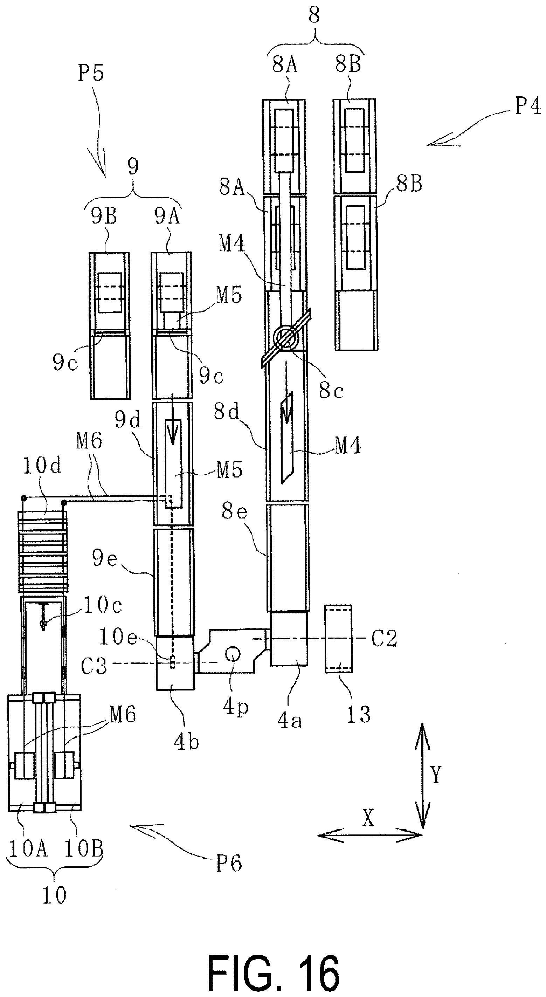

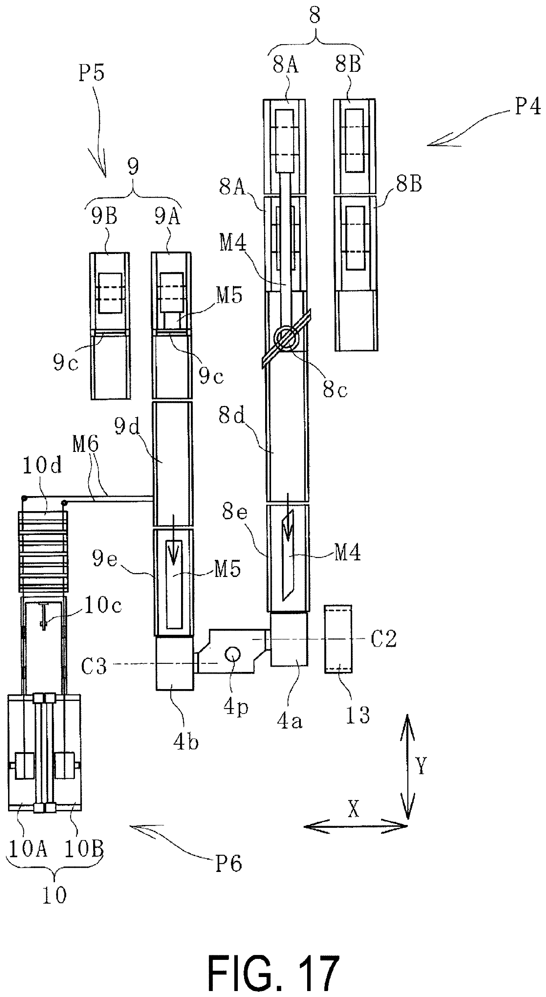

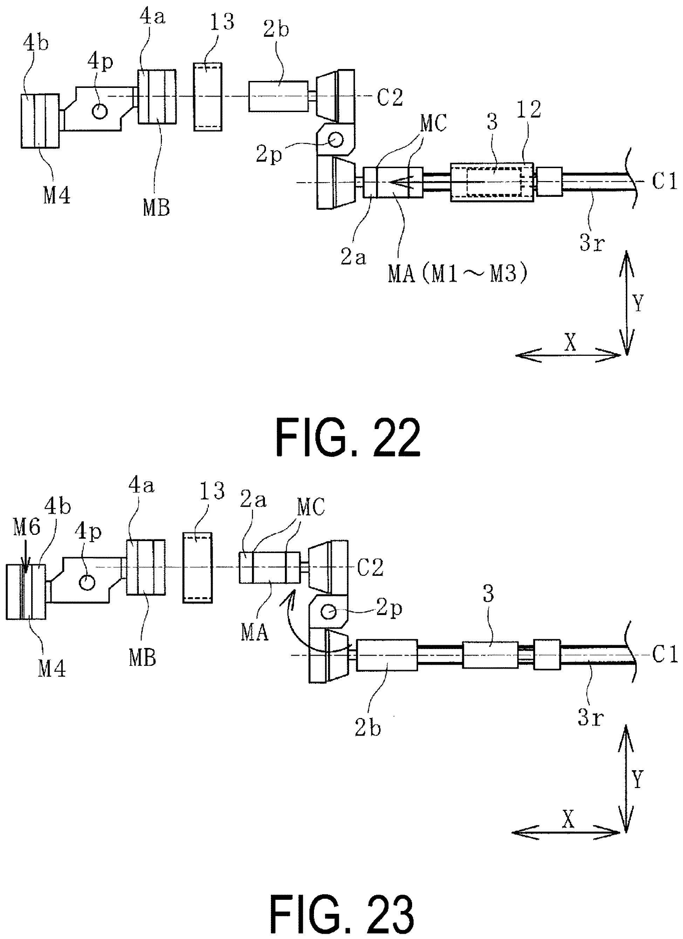

In this production method, the cylindrical inner circumferential member MA and the cylindrical outer circumferential member MB are formed simultaneously. Therefore, FIGS. 9 to 14 illustrate a procedure of forming the inner circumferential member MA, FIG. 15 illustrates a state in which the pair of bead members MC are externally fitted to the inner circumferential member MA, and FIGS. 16 to 21 illustrate a procedure of forming the outer circumferential member MB. FIGS. 22 to 26 then illustrate a procedure of forming the green tire G using the inner circumferential member MA, the pair of bead members MC, and the outer circumferential member MC.

As illustrated in FIGS. 9 to 14, the respective materials M1 to M3 of the inner circumferential member MA precut into a predetermined length, are supplied from each of the stock positions P1 to P3 to the band drum 3 by the respective supply conveyors 5e to 7e via the corresponding slide conveyors 5d to 7d. On the bunt drum 3, the inner circumferential member MA is formed using the respective materials M1 to M3 cut into a predetermined length.

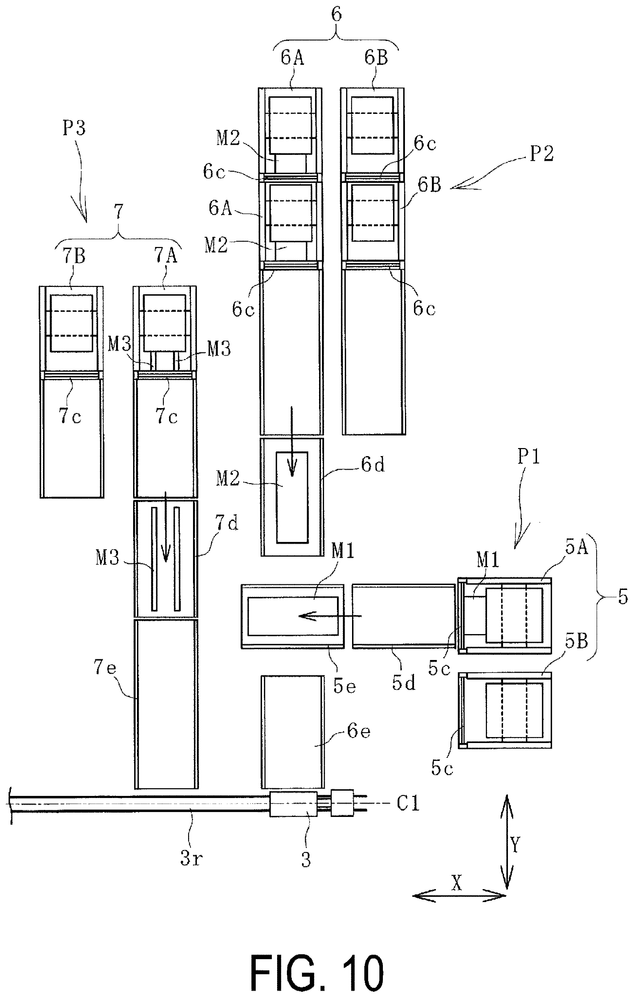

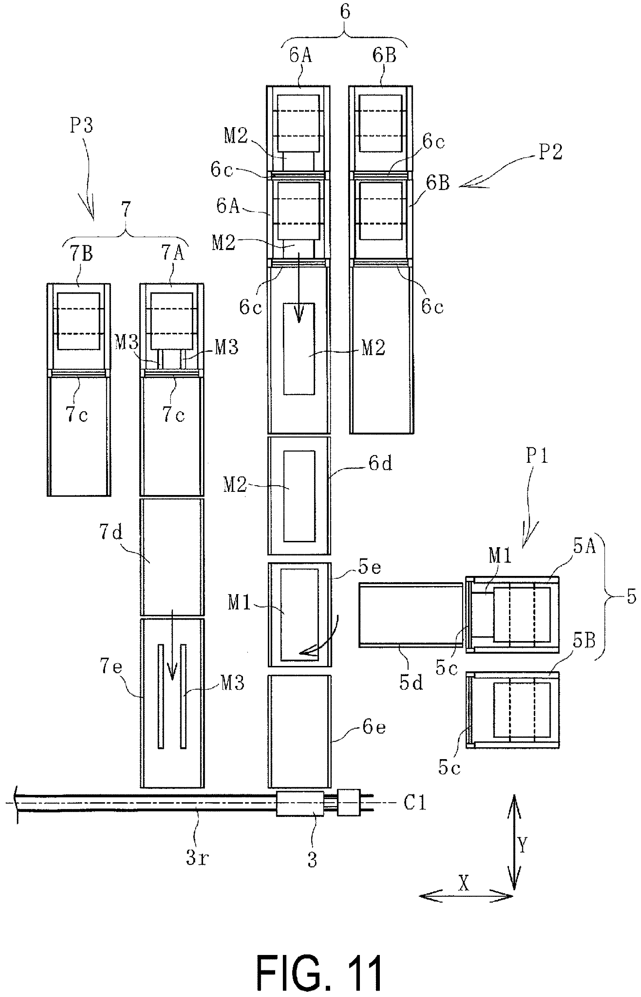

More specifically, the materials M1, M2, M2 and M3 fed from the supply units 5A, 6A, 6A and 7A on one side are cut into a predetermined length by the respective cutters 5c, 6c, 6c and 7c; loaded on the slide conveyors 5d, 6d, 6d and 7d disposed ahead of the supply units 5A, 6A, 6A and 7A; and transported to the supply conveyors 5e, 6e, 6e and 7e. The supply conveyor 5e is turnable by 90 degrees in a plan view and, when receiving the material M1 from the slide conveyor 5d, comes to a tandem alignment with the slide conveyor 5d in the X direction as illustrated in FIGS. 9 and 10. The supply conveyor 5e having received the material M1 from the slide conveyor 5d turns 90 degrees and comes to a tandem alignment with the slide conveyor 6d and the supply conveyor 6e in the Y direction as illustrated in FIG. 11.

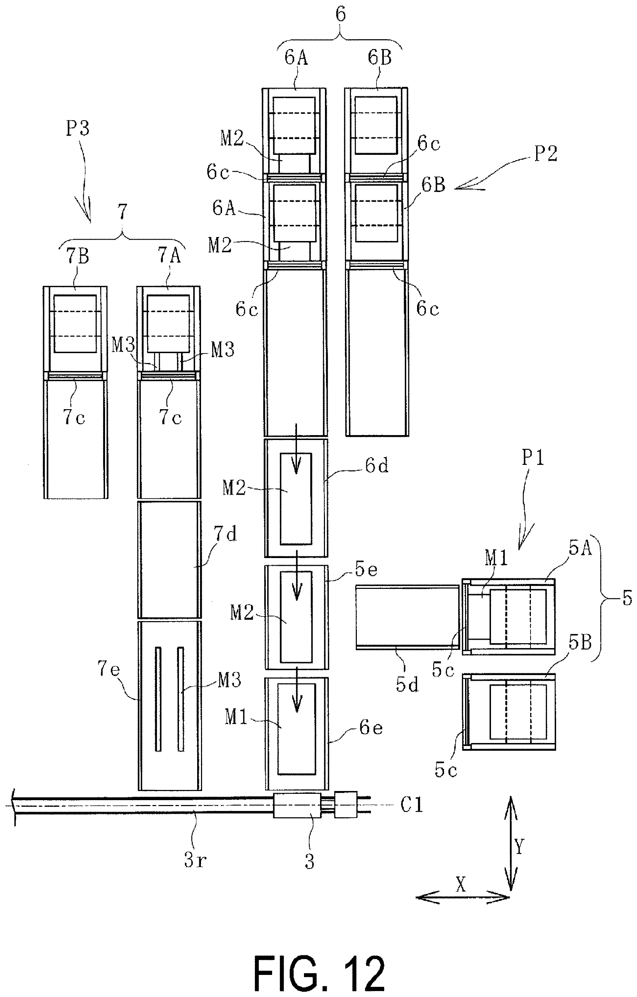

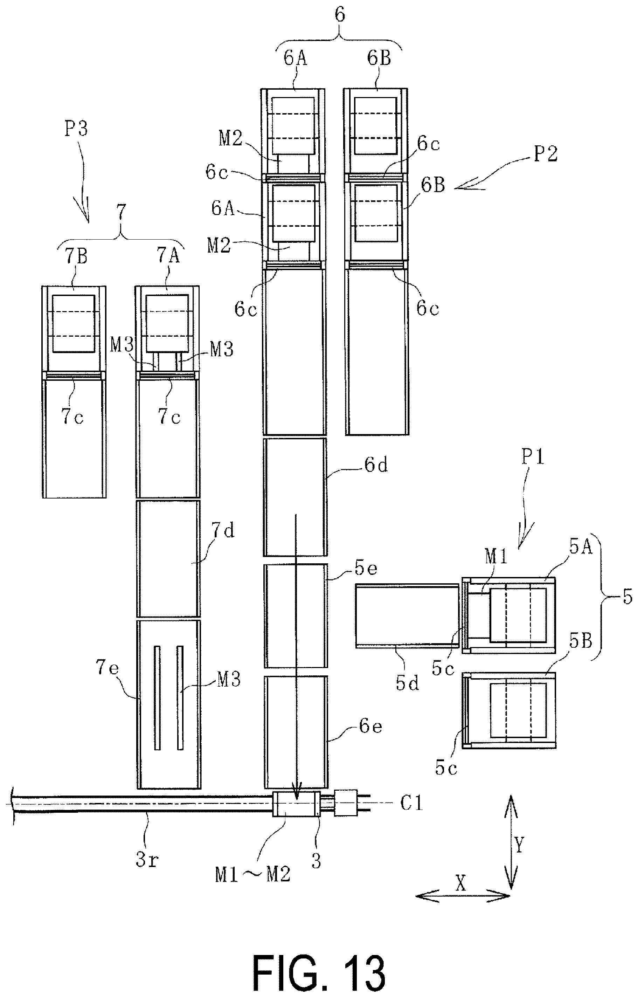

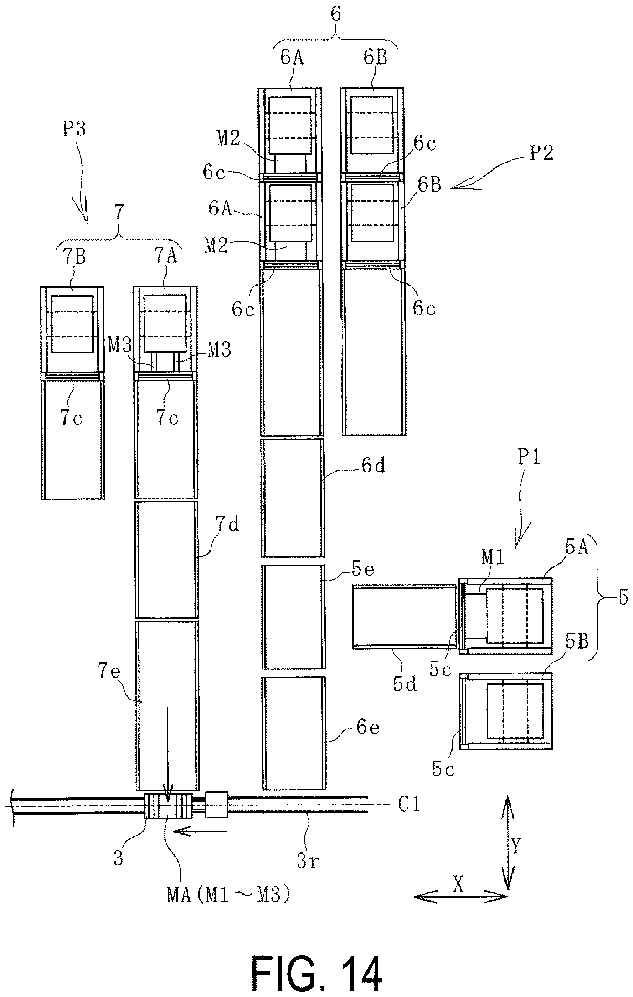

As illustrated in FIG. 12, the material M1 fed from the supply unit 5A on one side and the materials M2 and M2 supplied from the respective supply units 6A and 6A arranged in tandem on one side come to be disposed in series with the band drum 3. As illustrated in FIG. 13, the materials M1, M2 and M2 arranged in tandem and cut into a predetermined length are sequentially wound around the band drum 3 while rotating the band drum 3 in one direction about the drum axial center C1 to be formed and layered into a cylindrical shape. In the present embodiment, the supply conveyors 5e, and 6e function as supply conveyors that supply the materials M1 and M2 to the band drum 3.
In addition, while the materials M1, M2 and M2 are wound around the band drum 3 to be formed and layered into a cylindrical shape, a pair of materials M3 fed from the supply unit 7A on one side and cut into a predetermined length are transported to the supply conveyor 7e. Next, the band drum 3 ahead of the supply conveyor 6e is moved in the X direction as illustrated in FIG. 14, and installed ahead of the supply conveyor 7e. Subsequently, a pair of the materials M3 cut into a predetermined length and loaded on the transport conveyor 7e are wound around the band drum 3 to be formed and layered into a cylindrical shape, while rotating the band drum 3 around the drum axial center C1. As a result, the cylindrical inner circumferential member MA is formed, having the materials M1, M2 and M3 layered thereon in sequence. As such, the inner circumferential member MA is sequentially and continuously formed.

Next, as illustrated in FIG. 15, a pair of the bead members MC are supplied from the bead supply unit 11A on one side and externally fitted to the inner circumferential member MA using the bead transfer machine 14. The respective bead members MC are externally fitted in the width direction of the inner circumferential member MA (X direction) at intervals.

As illustrated in FIGS. 16 to 21, the respective materials M4 and M5 of the outer circumferential member MB precut into a predetermined length, are supplied from each of the stock positions P4 and P5 to the belt drum 4 by the respective supply conveyors 8e and 9e via the corresponding slide conveyors 8d and 9d. The material M6 is supplied to a head 10e disposed below and adjacent to the belt drum 4 in an elongated state via a festoon part 10c. On the belt drum 4, the outer circumferential member MB is formed using the materials M4 and M5 cut into a predetermined length and the material M6 guided out from the head 10e.

More specifically, the materials M4, M4 and M5 fed from the supply units 8A, 8A and 9A on one side are cut into a predetermined length by the respective cutters 8c, 8c and 9c; loaded on the slide conveyors 8d, 8d and 9d disposed ahead of the supply units 8A, 8A and 9A; and transported to the supply conveyors 8e, 8e and 9e. Each of the supply conveyors 8e and 8e disposed on the upper and the higher stages as illustrated in FIG. 6 has loaded thereon one piece of material M4 cut into a predetermined length.

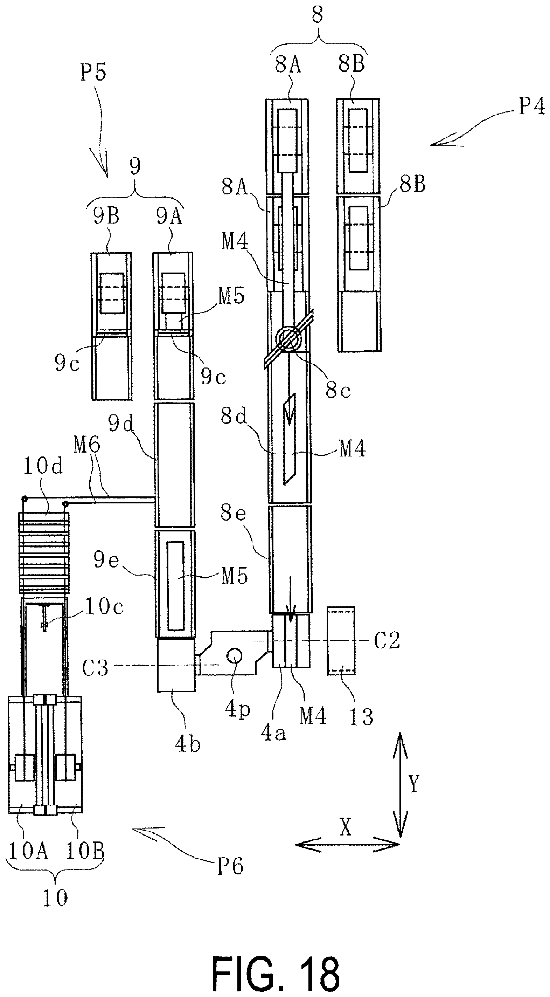

As illustrated in FIG. 18, the materials M4 and M4 supplied from the respective supply units 8A and 8A arranged in tandem on one side are sequentially wound around the belt drum 4a on one side to be formed and layered into a cylindrical shape. For example, the material M4 cut into a predetermined length and loaded on the supply conveyor 8e disposed on the higher stage is wound around the belt drum 4a to be formed into a cylindrical shape while rotating the belt drum 4a about the drum axial center C2 in one direction. Next, the material M4 cut into a predetermined length and loaded on the supply conveyor 8e disposed on the lower stage is wound around the belt drum 4a to be formed into a cylindrical shape while rotating the belt drum 4a about the drum axial center C2 in the other direction.

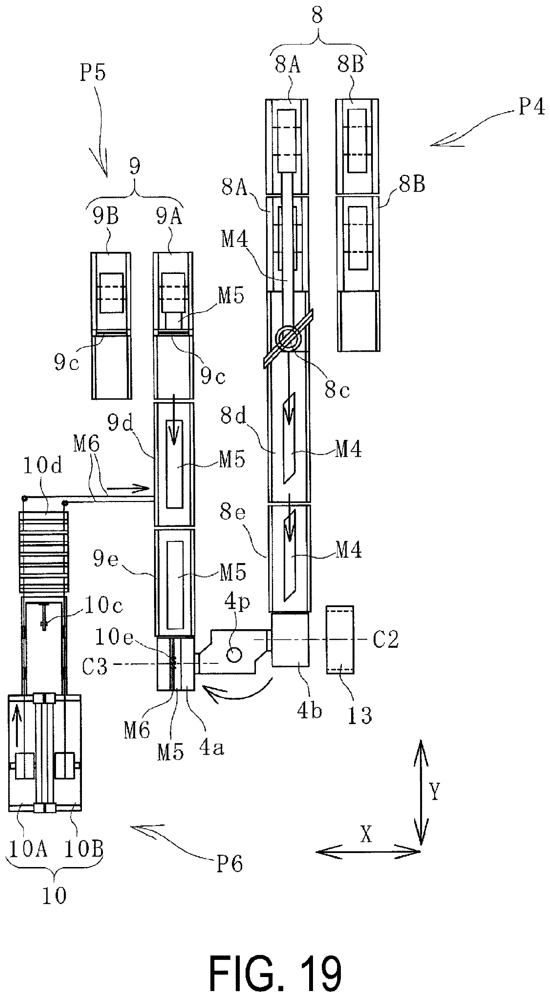

Next, as illustrated in FIG. 19, the belt drum 4 is turned clockwise by 180 degrees about the turning shaft 4p. As a result, the belt drum 4a of on one side is moved ahead of the supply conveyor 9e, and the belt drum 4b on the other side is moved ahead of the supply conveyors 8e and 8e. Then, the material 10A supplied from the one supply unit M6 is spirally wound around the belt drum 4a by using the head 10e on one side, while rotating the belt drum 4a on one side in one direction about the drum axial center C3. As a result, a belt reinforcing layer formed by the material M6 is layered in a predetermined width direction (X-direction) range of the outer circumferential surface of the cylindrically formed material M4.

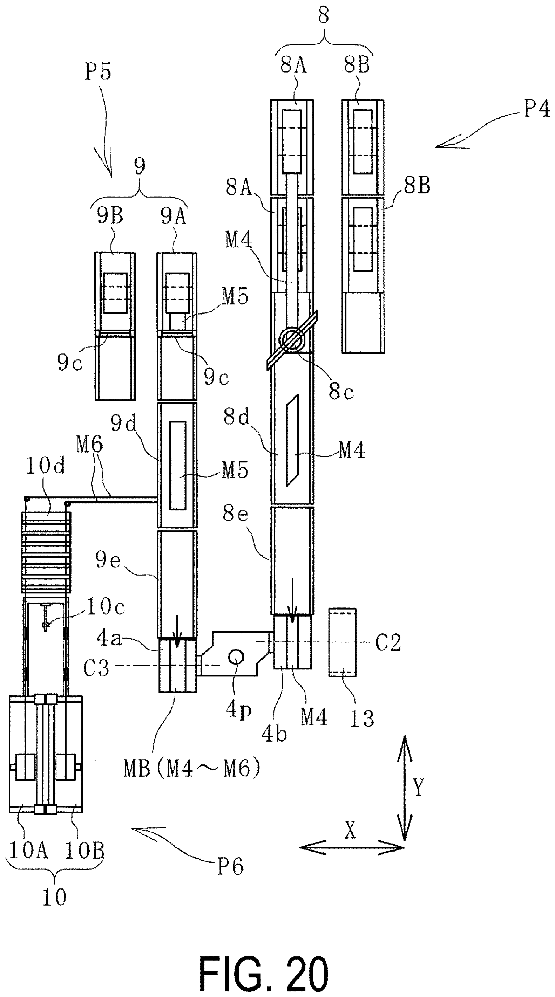

Next, as illustrated in FIG. 20, the material M5 cut into a predetermined length and loaded on the supply conveyor 9e is wound around the belt drum 4a to be formed and layered into a cylindrical shape while rotating the belt drum 4a on one side in one direction about the drum axial center C3. Accordingly, a cylindrical outer circumferential member MB is formed of the belt drum 4a on one side, having the materials M4, M4, M6 and M5 layered in sequence thereon. On the belt drum 4b on the other side, the materials M4 and M4 cut into a predetermined length and loaded on the respective supply conveyors 8e and 8e are sequentially wound around the belt drum 4b to be formed and layered into a cylindrical shape, while rotating the belt drum 4b around the drum axial center C2.

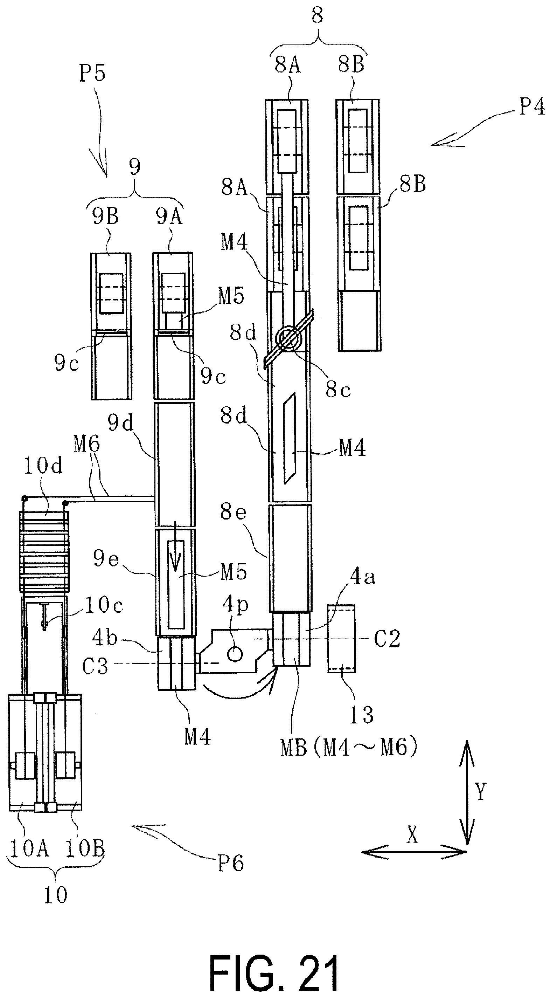

Next, as illustrated in FIG. 21, the belt drum 4 is turned counterclockwise by 180 degrees about the turning shaft 4p. Accordingly, the belt drum 4a on one side having the outer circumferential member MB formed thereon is moved toward the shaping drum 2.

As illustrated in FIG. 22, the formed inner circumferential member MA is transferred from the band drum 3 to the shaping drum 2a on one side by using the band transfer machine 12. As a result, the shaping drum 2a on one side has the inner circumferential member MA and the pair of bead members MC externally fitted thereon. Both end portions in the width direction of the inner circumferential member MA are then turned up around the bead member MC on the shaping drum 2a by a known method. Both end portions in the width direction of the turned-up inner circumferential member MA are then pressed toward the drum axial center C1 by a known method, while rotating the shaping drum 2a about the drum axial center C1.

Next, as illustrated in FIG. 23, the shaping drum 2 is turned clockwise by 180 degrees about the turning shaft 2p. As a result, the shaping drum 2a on one side and the belt drum 4a on one side are arranged side by side in the X direction.

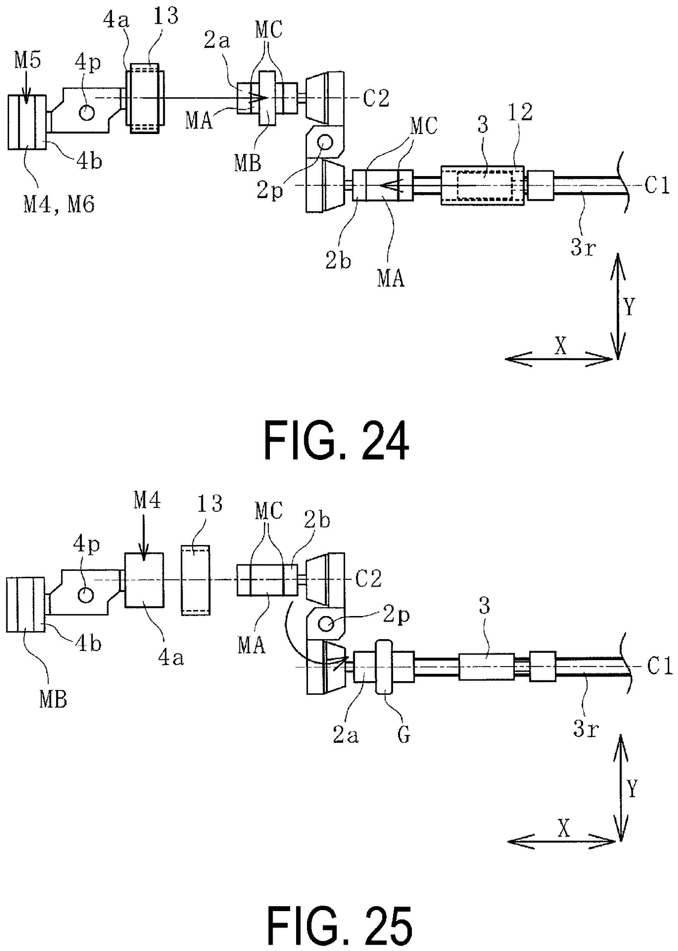

Next, as illustrated in FIG. 24, the outer circumferential member MB is transferred from the belt drum 4a on one side to the shaping drum 2a on one side by using the belt transfer machine 13, to be externally inserted into the inner circumferential member MA. Then, with the outer circumferential surface of the inner circumferential member MA and the inner circumferential surface of the outer circumferential member MB brought into contact with each other on the shaping drum 2a, the outer circumferential member MB is pressed toward the drum axial center C2 while rotating the shaping drum 2a about the drum axial center C2, whereby the inner circumferential member MA, the outer circumferential member MB, and the pair of bead members MC are integrated to form the green tire G. Note that the materials and M6 and M5 are wound
around the belt drum 4b on the other side to form the outer circumferential member MB by a similar procedure as described above. In addition, the inner circumferential member MA and the pair of bead members MC are externally fitted to the shaping drum 2b on the other side by a similar procedure as described above.

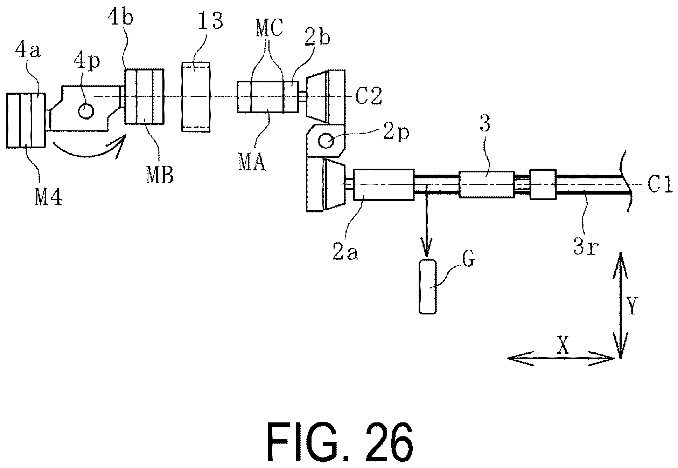

Next, as illustrated in FIG. 25, the shaping drum 2 is turned counterclockwise by 180 degrees about the turning shaft 2p. Subsequently, as illustrated in FIG. 26, the green tire G is removed from the shaping drum 2a on one side and transported to the vulcanizer 15.

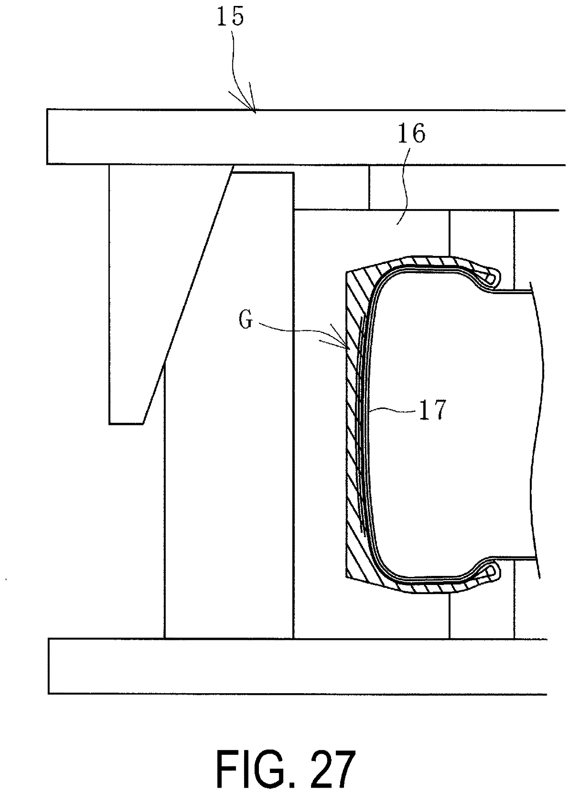

As illustrated in FIG. 27, the green tire G is disposed inside the vulcanization mold 16 mounted on the vulcanization device 15. Subsequently, the green tire G is vulcanized between the closed vulcanization mold 16 and an expanded vulcanization bladder 17 to complete the tire T. Vulcanization of the green tire G can be performed using various known methods. Although a pneumatic tire T is manufactured in the present embodiment, the present invention can be applied when producing various types of the tire T.

When a predetermined number of green tires G are formed in the above-mentioned forming process of the green tire G, the materials M1 to M6 stocked in the supply units P1 to P6 on one side are exhausted at the stock positions 5A to 10A of the respective materials M1 to M6.

As described above, the slide conveyors 5d to 9d are disposed to slide in the width direction with respect to the supply units 5 to 9 arranged side by side at each of the stock positions P1 to P5. Therefore, when any of the materials 5A to 9A stocked in the supply units M1 to M5 on one side runs out, the exhausted one of the materials M1 to M5 can be supplied from a corresponding one of the units 5B to 9B on the other side by sliding a corresponding one of the slide conveyors 5d to 9d in the width direction of the supply units 5 to 9 arranged side by side. In other words, the slide conveyors 5d to 9d are slid ahead of the supply units 5B to 9B on the other side to load the materials M1 to M5 cut into a predetermined length on the slide conveyors 5d to 9d. Subsequently, the slide conveyors 5d to 9d are slid to positions tandem with the supply conveyors 5e to 9e to transfer the materials M1 to M5 cut into the standard length to the supply conveyors 5e to 9e to be supplied therefrom. While the materials M1 to M5 cut into a predetermined length are being supplied to the supply conveyors 5e to 9e from the supply units 5B to 9B on the other side, the supply units 5A to 9A having run out of the materials M1 to M5 are replaced with new ones of the supply units 5A to 5B having the materials M1 to M5 stocked therein.

In addition, it is possible at the stock position P6 to switch to one of the supply units 10 arranged side by side to supply the material M6. Therefore, when the material 10A stocked in the supply unit M6 on one side runs out, the material M6 can be supplied from the supply unit 10B on the other side. While the material M6 is being supplied from the supply unit 10B on the other side, the supply unit 10A which has run out of the material M6 is replaced with a new supply unit 10A having the material M6 stocked therein. Therefore, interruption of the forming process of the green tire G due to replenishment of the respective materials M1 to M6 can be avoided.

Furthermore, when the pair of bead members MC of the bead supply unit 11A on one side run out, the pair of bead members MC can be supplied from the bead supply unit 11B on the other side. While the pair of bead members MC are being supplied from the bead supply unit 11B on the other side, the bead supply unit 11A on one end having run out of the bead members MC is turned from the supply position to the standby position so that the bead supply unit 11A can be replenished with a new pair of bead members MC, and therefore interruption of the forming process due to replenishment of the pair of bead members MC can also be avoided.

Accordingly, it is not necessary to load and stock an extra amount of the materials M1 to M5 on the respective supply conveyors 5e to 9e in order to reduce the time loss due to replenishment of the respective materials M1 to M5. Accordingly, the length of each of the supply conveyors 5e to 9e can be minimized. In addition, stocking the respective materials M1 to M6 in the respective supply units in a wound state is advantageous for downsizing the forming device 1.

The drum axial centers C1 of the band drum 3 and the shaping drum 2 are coaxially aligned in transferring the inner circumferential member MA, and the drum axial centers C2 of the belt drum 4 and the shaping drum 2 are coaxially aligned in transferring the outer circumferential member MB. Therefore, the band transfer machine 12 and the belt transfer machine 13 only need to be moved in the direction of the drum axial centers C1 and C2 common to the drums 2, 3 and 4, which is increasingly advantageous for downsizing the forming device 1. As a result, the foregoing approach becomes advantageous for producing the tire T with a high productivity, while downsizing the forming device 1.

Although cutting the materials M1 to M5 into a predetermined length causes them to shrink over time and variation may occur in their shrinkage state, the respective materials M1 to M5 in the present embodiment are preliminarily stocked in an elongated state at the respective stock positions P1 to P5, and the respective materials M1 to M5 are fed from the supply units 5 to 9 and subsequently cut into a predetermined length. The respective materials M1 to M5 cut into a predetermined length are then supplied to the corresponding drums 3 and 4 via the corresponding slide conveyors 5d to 9d and the supply conveyors 5e to 9e. As such, cutting the materials M1 to M5 into a predetermined length immediately before forming the green tire G turns out to be advantageous for minimizing shrinkage of the materials M1 to M5 over time and variation of the amount of shrinkage in comparison with stocking the materials precut into a predetermined length. As a result, the foregoing approach contributes to improvement in quality of the manufactured tire T.

At each of the stock positions P1 to P5,
setting the supply units 5A to 9A on one side as main supply units, and sliding and fixedly disposing the corresponding slide conveyors 5d to 9d to positions ahead of the main supply units 5A to 9A allows for forming a supply path for the corresponding drums 3 and 4 by the main supply units 5A to 9A, the fixedly disposed slide conveyors 5d to 9d, and the corresponding supply conveyors 5e to 9e. In the supply path of each of the materials M1 to M5 formed as described above, it is not necessary to slide the slide conveyors 5d to 9d and therefore the green tire G can be formed more quickly, which becomes advantageous for improving the forming efficiency. In addition, the foregoing approach contributes to reduction of energy required for forming the green tire G.

When, however, supplying the materials M1 to M5 from the supply units 5B to 9B on the other side, the slide conveyors 5d to 9d must be slid each time the materials M1 to M5 are supplied from the respective supply units 5B to 9B to the corresponding supply conveyors 5e to 9e. Accordingly, the foregoing approach becomes disadvantageous for improving the efficiency of forming the green tire G and also disadvantageous for reducing the energy required for forming the green tire G.

Therefore, when one of the materials M1 to M5 stocked in the main supply units 5A to 9A runs out in a case where the materials M1 to M5 conforming to a same specification are stocked in the respective supply units 5 to 9 arranged side by side at the respective stock positions P1 to P5, the corresponding one of the slide conveyors 5d to 9d is slid and fixedly disposed to a position ahead of the new one of the main supply units 5A to 9A upon completion of replacing the empty one of the main supply units 5A to 9A with a new one of the main supply units 5A to 9A having the materials M1 to M5 stocked therein. Then, the new ones of the main supply units 5A to 9A, the fixedly disposed slide conveyors 5d to 9d and the corresponding supply conveyors 5e to 9e form supply paths for the corresponding drums 3 and 4, whereby the materials M1 to M5 can also be supplied from the new ones of the main supply units 5A to 9A.

As such, forming supply paths of the materials 5d to 9d with the frequency of sliding the slide conveyors M1 to M5 being suppressed becomes more advantageous for improving the forming efficiency of the green tire G than when continuously supplying the respective materials M1 to M5 from the supply units 5B to 9B on the other side, and further contributes to reduction of the energy required for forming the green tire G. In order to use the main supply units 5A to 9A as the supply paths of the materials M1 to M5 for a longer time period than the supply units 5B to 9B on the other side, the amount of stock of the materials M1 to M5 via the supply units 5A to 9A, for example, is increased in comparison with the amount of stock in the supply units 5B to 9B on the other side.

### Reference Signs List

1 Forming device
2 (2a, 2b) Shaping drum
2p Turning shaft
3 Band drum
3r Guide rail
4 (4a, 4b) Belt drum
4p Turning shaft
5 (5A, 5B) Innerliner supply unit
5c Cutter
5d Slide conveyor
5e Supply conveyor
6 (6A, 6B) Carcass material supply unit
6c Cutter
6d Slide conveyor
6e Supply conveyor
7 (7A, 7B) Side portion supply unit
7c Cutter
7d Slide conveyor
7e Supply conveyor
8 (8A, 8B) Belt material supply unit
8c Cutter
8d Slide conveyor
8e Supply conveyor
9 (9A, 9B) Tread portion supply unit
9c Cutter
9d Slide conveyor
9e Supply conveyor
10 (10A, 10B) belt reinforcing material supply unit
10c Cutter
10d Festoon portion
10e Head
11 (11A, 11B) bead supply unit
11P Turning shaft
12 Band transfer machine
13 Belt transfer machine
14 Bead transfer machine
15 Vulcanization device
16 Vulcanization mold
17 Vulcanization bladder
M Tire member
MA Inner circumferential member
MB Outer circumferential member
MC Bead member
M1 Innerliner
M2 Carcass material
M3 Side portion
M4 Belt material
M5 Tread portion
M6 Belt reinforcing material
G Green tire
T Vulcanized tire (completed tire)

## Claims

1. A tire production method of forming a green tire by layering multiple types of tire members and vulcanizing the green tire, the tire production method comprising:
providing, at least as the tire members, an inner circumferential member comprising an innerliner, a carcass material, and a side portion as materials, an outer circumferential member comprising a belt material and a tread portion as materials, and a bead member;
stocking each of the materials at a stock position, at the stock position of each of the materials, arranging a plurality of supply units around which each of the materials is wound side by side, disposing a slide conveyor configured to slide in a width direction with respect to each of the supply units, and stocking a predetermined number of pairs of the bead members in a plurality of bead supply units at a bead stock position;
supplying, by an individual supply conveyor, each of the materials of the inner circumferential member precut into a predetermined length from each stock position to a band drum via the corresponding slide conveyor and in the band drum, forming the inner circumferential member using each of the materials cut into a predetermined length;
supplying, by an individual supply conveyor, each of the materials of the outer circumferential member precut into a predetermined length from each stock position to a belt drum via the corresponding slide conveyor and in the belt drum, forming the outer circumferential member by using each of the materials cut into a predetermined length;
transferring, by using a band transfer machine, the inner circumferential member from the band drum to the shaping drum, transferring, by using a belt transfer machine, the outer circumferential member from the belt drum to the shaping drum, and externally fitting, by using a bead transfer machine, a pair of the bead members from one of the bead supply units to the inner circumferential member;
coaxially aligning drum axial centers of the band drum and the shaping drum in transferring the inner circumferential member and coaxially aligning a drum axial center of the belt drum and the drum axial center of the shaping drum in transferring the outer circumferential member;
in the shaping drum, forming the green tire by using the inner circumferential member, the outer circumferential member, and the pair of the bead members; and
at the stock position of each of the materials, supplying, when the material stocked in one of the supply units runs out, the material from the other of the supply units and replacing, while the material is being supplied from the other of the supply units, the one of the supply units that is empty with a new one of the supply units with the material stocked.

2. The tire production method according to claim 1, comprising:
at each of the stock positions, stocking each of the materials in an elongated state;
feeding each of the materials from the supply units and cutting each of the materials into a predetermined length; and
supplying each of the materials cut into a predetermined length via the corresponding slide conveyor and the supply conveyor.

3. The tire production method according to claim 1 or 2, comprising:
causing, at the stock position of each of the materials, any one of the supply units to be set as a main supply unit; and
sliding and arranging the corresponding slide conveyor to and at a position ahead of the main supply unit, thus causing the main supply unit, the slide conveyor, and the corresponding supply conveyor to form a supply path for the corresponding drum.

4. The tire production method according to claim 3, comprising:
when the material stocked in the main supply unit runs out, sliding and arranging, upon completion of replacing the main supply unit that is empty with a new main supply unit with the materials stocked, the corresponding slide conveyor disposed to and at a position ahead of the new one of the main supply units.

5. A tire production system comprising a forming device comprising a shaping drum on which multiple types of tire members are layered to form a green tire and a vulcanization device that vulcanizes the green tire, the tire production system comprising:
at least as the tire members, an inner circumferential member comprising an inner liner, a carcass material, and a side portion as materials, an outer circumferential member comprising a belt material and a tread portion as materials, and a bead member;
a slide conveyor having a stock position at which each of the materials is stocked, a plurality of supply units with each of the materials wound being arranged side by side at a stock position of each of the material, the slide conveyor being configured to slide in a width direction with respect to each of the supply units;
a bead stock position at which a predetermined number of pairs of the bead members are stocked, a plurality of bead supply units being disposed at the bead stock position;
a supply conveyor configured to supply each of the materials of the inner circumferential member precut into a predetermined length from each stock position to a band drum;
a band drum on which the inner circumferential member is to be formed by using each of the materials precut into a predetermined length;
a supply conveyor configured to supply each of the materials of the outer circumferential member precut into a predetermined length from each stock position to a belt drum via the corresponding slide conveyor;
a belt drum on which the outer circumferential member is to be formed by using each of the materials precut into a predetermined length;
a band transfer machine configured to transfer the inner circumferential member from the band drum to the shaping drum;
a belt transfer machine configured to transfer the outer circumferential member from the belt drum to the shaping drum; and
a bead transfer machine configured to externally fit a pair of the bead members from one of the bead supply units to the inner circumferential member;
drum axial centers of the band drum and the shaping drum being coaxially aligned in transferring the inner circumferential member, and a drum axial center of the belt drum and the drum axial center of the shaping drum being coaxially aligned in transferring the outer circumferential member,
in the shaping drum, the green tire being formed by using the inner circumferential member, the outer circumferential member, and the pair of the bead members, and
at the stock position of each of the materials, when the material stocked in one of the supply units runs out, the material is supplied from the other of the supply units, and while the material is being supplied from the other of the supply units, the one of the supply units that is empty being replaced with a new one of the supply units with the material stocked.
